# EUROPEAN PATENT SPECIFICATION

(11) **EP 4 075 822 B1**
(45) Date of publication and mention of the grant of the patent: **07.06.2023**
(21) Application number: 21168551.6
(22) Date of filing: 15.04.2021
(51) Int. Cl.: H04R 1/08, G10L 25/78, H04R 1/10, H04R 3/00, G06F 3/16, H04M 3/08, H04M 3/56, G10L 21/0208

(54) **MICROPHONE MUTE NOTIFICATION WITH VOICE ACTIVITY DETECTION**
MIKROFONSTUMMSCHALTUNGSBENACHRICHTIGUNG MIT SPRACHAKTIVITÄTSDETEKTION
NOTIFICATION DE SOURDINE DE MICROPHONE AVEC DÉTECTION D'ACTIVITÉ VOCALE

(43) Date of publication of application: 19.10.2022
(73) Proprietor: RTX A/S, 9400 Nørresundby (DK)
(72) Inventor: Schiøler, Sebastian Biegel, 9000 Aalborg (DK); Brandt, Christian, 9200 Aalborg SV (DK)
(74) Representative: Plougmann Vingtoft a/s

(56) References cited:
- EP-A1- 2 881 946
- US-A1- 2015 195 411
- US-A1- 2018 233 125
- US-A1- 2021 014 599

## Description

### FIELD OF THE INVENTION

The present invention relates to the field of audio communication, such as two-way audio communication over a communication link, e.g. on-line two-way communication. Specifically, the invention proposes a method for microphone mute notification to the user based on a voice activity detection algorithm, e.g. using microphone inputs to eliminate or reduce disturbing notifications of the user.

### BACKGROUND OF THE INVENTION

A headset has many advantages for attending online calls or meetings, but some advantages also have drawbacks. It is desired to be able to mute the headset microphone if e.g., the user has nothing to add to the call for a while. One drawback with this functionality is that once the user wants to speak in the call, the user might have forgot that the microphone is muted.

This problem is in several cases solved by detecting if the user is speaking into a muted microphone and then making a visual or an audible notification to the user. The audible notification can be an advantage as the user in a call will always hear the notification. However, one drawback of this functionality is that sometimes the user might intentionally speak into a muted microphone.

For example, if the user is in a call, and at some point the user wants to speak to a colleague physically present near the user. The user's microphone is muted, so when the user starts the conversation with the colleague, an audible notification will played and thus disturb the user rather than serving as an assistance.

Further, another drawback is that the headset microphone also picks up surrounding sounds. These surroundings sounds may include a colleague speaking. This can lead to the situation where the user is in a call with the microphone muted, and when a colleague is speaking, the headset microphone picks up the speech and alerts the user that he is speaking into a muted microphone, which is not the case.

EP 2 881 946 A1 describes a microphone mute/unmute system which detects silence events and voice activities from far-end and near-end audio signals to determine whether an audio event is an interference event or a speaker event. The system described may further detect faces or motion from images from a camera to determine a mute or unmute indication.

US 2015/0195411 A1 describes a system for providing intelligent and automatic mute notification. The system provides mechanics for controlling false positive determinations of speaking through mute by monitoring local audio and remote audio.

US 2018/233125 A1 discloses a system having two microphones, one to pick up speech produced by the wearer, and one or more other microphones to detect third party speech, the system being configured to identify speech and, in particular, to differentiate between speech produced by the wearer of the device and speech produced by the third party. The detected speech is however used for configuring parameters such as noise cancellation parameters rather than for triggering mute notifications.

### SUMMARY OF THE INVENTION

Thus, according to the above description, it is an object of the present invention to provide a method and an apparatus eliminating or reducing the problems with unintended notifications or alerts in case of a user participating in a call or conversation with a muted microphone.

In a first aspect, the invention provides a method for notifying a user of a mute state of a microphone system during a call with one or more other participants, in case the user speaks while the microphone system is muted, as defined by appended claim 1.

Such method is advantageous, since a number of problems with simple notifications of a muted microphone can be eliminated or at least reduced. Thus, significant disturbance in various situations during a call can be avoided. Especially, the method is suitable for a headset arranged for connection to a computer, a tablet or smartphone or the like. In general the method can be used in various devices with a microphone intended for use in a call, and where the microphone has a mute function.

The invention is based on the insight that a significant number of unintended microphone mute notifications can be eliminated or reduced in an intelligent way by rather simple processing which can be implemented e.g. in a headset. By use of a Voice Activity Detection (VAD) algorithm, it can be ensured that only speech in the muted microphone will trigger a mute state notification. Introducing further an additional condition to be fulfilled before a mute state notification is provided to the user, an intelligent detection of the user's activity can be provided, so as to significantly reduce disturbing mute state notifications, e.g. if the user speaks to a colleague in the physical surroundings.

The mute state notification may be audible as the headset user will be most likely to observe this form of notification. Preferably, a frequency of the mute state notification should be configurable, e.g. configurable by the user, to avoid notifications being played too often if the headset user has a physical conversation.

Especially, use of more microphones apart from the primary user microphone is used to detect another person speaking in the surroundings. Even further, a separate VAD algorithm is used for detection of speech captured by such additional microphones. Still further, a separate VAD algorithm can be applied to an incoming audio signal in the call, thus allowing detection of other participants speaking, and e.g. only allow mute state notification to the user in case none of the other participants in the call are speaking, thereby indicating that it may be the intention of the user to speak.

In some embodiments, Noise Cancellation (ENC or ANC) microphones can be used to further assist the VAD algorithm and increasing the VAD algorithm in making the decision of the presence of speech.

The additional microphones can also be used for estimating if the headset user is answering a question from a person in their surroundings. The surrounding microphones will detect speech in the user's surroundings and if the primary microphone detects speech from the user in a flow that is estimated to be an answer or contribution to a physical conversation, then a notification will not be sent.

In the following preferred embodiments and features will be described.

According to the invention, the method comprises determining if it is likely that the user has a physical conversation, and providing the mute state notification to the user only if it is not likely that the user has a physical conversation. Especially, the method comprises performing a first VAD algorithm on output signals from a microphone capturing the user's speech, such as a mouth microphone in a headset, and performing a second Voice Activity Detection algorithm on output signals from at least one additional microphone to determine speech from another source. Especially, the method may comprise determining a timing between speech from the user and speech from another source so as to determine if it is likely that the user has a physical conversation.

The method may comprise performing a VAD algorithm on a signal indicative of sound from the at least one other participant in the call, so as to detect speech from the at least one other participant in the call. Especially, the method may comprise providing a mute state notification to the user only in case it is detected that the user speaks, while at the same time there is no speech detected from the at least one other participant in the call. Thus, in this way an intelligent mute state notification can be provided to the user, only when it is most likely that the user intends to speak in spite of the microphone being muted, namely when the user speaks while the other participants in the call are silent.

The method may comprise performing a noise cancellation algorithm by processing output signals from a primary microphone, e.g. headset mouth microphone, and output signals from the additional microphone to suppress surrounding noise. This may help increasing performance of the VAD algorithm.

If preferred, a measure of frequency of mute state notifications can be set by the user. Hereby, an even lower disturbance can be experienced, since the user can lower the frequency of notifications in case they are still found disturbing.

It is understood that a VAD algorithm detects the presence of speech in a signal. Preferably, features are extracted from the signal in time or frequency domain and used in a classification rule to determine if speech is present or not. While in a muted state, the microphone, e.g. in a headset, provides a real time signal to the VAD algorithm. Implementations of a VAD algorithm will be known by the skilled person.

In a second aspect, the invention provides a device arranged for two-way audio communication, such as in a wireless format, the device comprising a microphone system and processor system arranged to perform the method according to the first aspect. Said device is defined in appended claim 5.

The device preferably comprises a loudspeaker, so as to allow two-way audio communication. The device may e.g. be a standalone device with the microphone system and a loudspeaker in one unit with a wired (e.g. USB) or wireless connection (e.g. Bluetooth) to a computer or a smartphone or the like.

Especially, the device may comprise a headset system arranged for two-way audio communication, such as in a wireless format, the headset system comprising
- a headset arranged to be worn by the user, the headset comprising a microphone system comprising at least a mouth microphone and at least one ear cup with a loudspeaker,
- a mute activation function which can be activated by the user to mute sound from the mouth microphone in a mute state during the call, and
- a processor system arranged to perform the method according to the first aspect so as to determine if it is appropriate to notify the user of a mute state, when the user speaks while the mouth microphone is in the mute state.

Especially, the microphone system of the claimed device comprises at least one additional microphone positioned separate from the mouth microphone. E.g. the mouth microphone may be implemented as a plurality of separate microphones so as to allow beamforming for suppressing surrounding sound captured by the mouth microphone. E.g. one or several additional microphones may be located on one or both earcups of the headset to capture surrounding sounds, e.g. for active noise cancellation of sound reaching the ears of the user. E.g. an array of additional microphones are arranged for beamforming to allow capturing speech from a limited direction relative to the user only, and/or e.g. determine a direction from which the speech comes, so as to allow determining whether it is likely that the speech is intended for the user as part of a conversation with the user, or if such speech can be considered as speech unintended for the user.

Especially, the processor system is arranged to provide the notification to the user as an audible notification via the loudspeaker, e.g. as a voice message.

Especially, the mute function may be implemented as a user operable knob or push button or contact or other means located on a part of the headset.

The processor system may be a processor as known in existing devices, such as a headset. Thus, the invention is suited for easy implementation in device having a processor with extra capacity for performing the VAD algorithm etc. Thus, the necessary processing can be implemented also in a compact headset, however if preferred, the processing system may be implemented on a computer or smartphone or a dedicated device separate from the headset.

In a third aspect, the invention provides a communication system comprising
- at least one device according to the first aspect, and
- a communication device arranged to provide a two-way call via a communication channel and to provide two-way audio to the at least one device according to the first aspect accordingly, e.g. in a digital wireless format such as DECT, or Bluetooth or other similar short range wireless formats.

Especially, the communication device may comprise a computer or a mobile phone such as a smartphone. The communication channel may be such as a mobile network e.g. 2G, 3G, 4G, 5G or the like, the internet, or a dedicated wired or wireless communication channel. The connection between the communication device and the communication channel may be a wired or a wireless connection, e.g. the connection may involve a wi-fi connection.

Especially, the communication system may be such as a teleconference system or the like.

In a fourth aspect, the invention provides use of the method according to the first aspect for performing one or more of: a telephone call, an on-line call, and a teleconference call.

In a fifth aspect, the invention provides use of the device according to the second aspect for performing one or more of: a telephone call, an on-line call, and a teleconference call.

In a sixth aspect, the invention provides use of the system according to the third aspect for performing one or more of: a telephone call, an on-line call, and a teleconference call.

In a seventh aspect, the invention provides a program code arranged to cause the method according to the first aspect to be performed, when the program code is executed on a processor. Especially, the program code may be stored in memory of a chip, or on one or more tangible storage media, or available on the internet in a version for downloading. The program code may be in a general code format or in a processor dedicated format.

It is appreciated that the same advantages and embodiments described for the first aspect apply as well to the further mentioned aspects.

### BRIEF DESCRIPTION OF THE FIGURES

The invention will now be described in more detail with regard to the accompanying figures of which
FIG. 1 illustrates the situation where a headset user is in an online call with call participants while being present in a physical room with another person who speaks to the headset user during the call,
FIG. 2 illustrates steps of a method embodiment,
FIG. 3 illustrates a block diagram with elements of an embodiment, and
FIG. 4 illustrates a headset system embodiment.

The figures illustrate specific ways of implementing the present invention and are not to be construed as being limiting to other possible embodiments falling within the scope of the attached claim set.

### DETAILED DESCRIPTION OF THE INVENTION

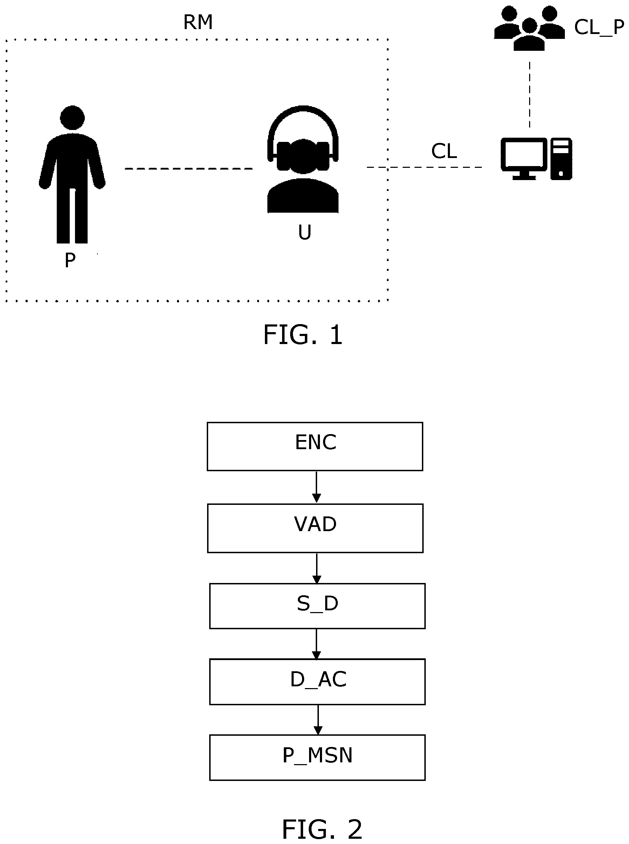

FIG. 1 shows the basic situation behind the invention, namely a user U present in a physical room RM with another person P, e.g. a colleague. The user U is in a call CL with other call participants CL_P, e.g. an online meeting via a computer or the like. The user U wears a headset for two-way communication with the call participants CL_P. If the user U has muted the headset microphone for some reason, and noise or speech is captured by the mouth microphone of the headset, a mute state notification is provided to the user U either via a visible message on a display or an audible message via the loudspeaker in the headset. However, such notification is unintended and disturbing for the user U e.g. in case the sound captured is speech from the person P in the room RM and/or speech by the user U in a conversation with the person P in the room RM.

This problem is solved by the invention by using a Voice Activity Detection (VAD) algorithm and an additional condition to determine if a mute state notification should be provided to the user U. Thereby, it is possible to eliminate notifications that are unintended and can disturb the user U rather than serving as an assistance.

FIG. 2 illustrates steps of a method embodiment, i.e. a method for notifying a user of a mute state of a microphone system during a call with one or more other participants, in case the user speaks while the microphone system is muted. The method comprises performing an environmental noise cancellation algorithm ENC by processing output signals from a primary microphone, e.g. headset mouth microphone, and output signals from an additional microphone to suppress surrounding noise from the environments where the user is located. Further, the method comprises processing VAD an output signal from the microphone system according to a VAD algorithm by means of a processor system while the microphone system is muted. Next, determining S_D if speech is present in accordance with an output of the VAD algorithm. Further, determining D_AC if an additional condition is fulfilled apart that it may have been detected that speech is present, and then finally providing P_MSN a mute state notification to the user only if it is determined that speech is present and the additional condition is fulfilled.

The additional condition is based on one or more separate VAD algorithms operating on additional microphones arranged to determine if speech is present in the environments around the user. This can be helpful in providing information important for determining the actual situation the user is in and thus determine if it is appropriate to provide a mute state notification or not.

By using a noise cancellation algorithm (often denoted ENC or ANC or the like), the performance of the VAD algorithm is improved.

The method as described, implemented e.g. in a headset, an intelligent way of providing mute state notifications can be applied.

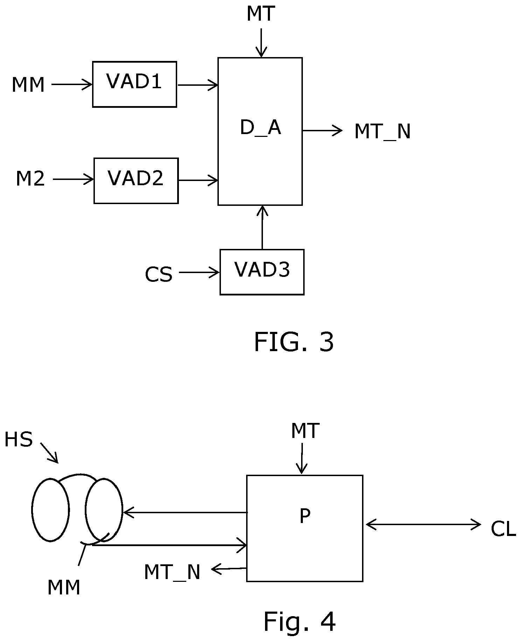

FIG. 3 shows a block diagram to illustrate a part of a headset embodiment. A determining algorithm D_A determines whether to send a mute state notification MT_N to a user when certain conditions are met, and in case the user's mouth microphone MM is in a mute state MT, i.e. blocking sound from the user during an ongoing call.

A first VAD algorithm VAD1 operates on the signal from the mouth microphone MM of the headset and determines a first input to the determining algorithm D_A, namely if speech is present. A second VAD algorithm VAD2 operates on an input from one or more microphones arranged to capture sound from the environments around the user, e.g. one or several microphones positioned on an exterior part of the headset, and it is then provided to the determining algorithm D_A if speech is present in the environments. Finally, a third VAD algorithm VAD3 operates on the sound input from the call CS, thus the third VAD algorithm serves to determine if the other participants in the call speak or are silent.

The determining algorithm D_A thus has two inputs from the VAD2, VAD3 in addition to the input from VAD1 that the user can be assumed to speak. Especially, the input from VAD2 is used to determine if a person in the environments speaks, while the user speaks, which most likely means that the user may be in a conversation with the person present in the environments and thus not intends to speak to participants in the call, and thus a mute state notification MT_N should in such case be avoided. Further, when it is detected that the user speaks, and the call sound CS indicates that the other participants do not speak, then it is likely that the user wants to speak in the call, and thus it is appropriate to provide a mute state notification MT_N.

FIG. 4 illustrates a headset system embodiment with a headset HS to be worn by a user during a call, and it has a mouth microphone MM to capture the user's voice, and two earcups each with a loudspeaker to provide audio to the user from the call. The mouth microphone MM and loudspeakers of the headset HS are connected to a processor P, e.g. integrated into one or both earcups of the headset HS. The processor P handles two-way audio communication in connection with a call CL, such as in a wireless format. The headset has a mute activation function MT which can be activated by the user to mute sound from the mouth microphone MM in a mute state MT during the call. The mute state MT is provided as input to the processor P which determines to provide a mute state notification MT_N to the user only when it is appropriate according to a method as described in the foregoing, when it is detected by means of a VAD algorithm, that the user speaks while the mouth microphone MM is in the mute state MT.

It is to be understood that the headset system embodiment shown is arranged for wired or wireless communication of two-way audio CL to a communication device serving to provide the call connection via a communication channel.

The following four sub aspects 1)-4) have been found to improve performance of the mute state notification method and device, and thus can be used in addition to the method steps defined in claim 1.
1) Context awareness by beamforming. Use of additional microphones placed on the headset to act as a microphone array. Beamforming techniques are then used to directionally locate a person, e.g. a colleague, speaking in the environments of the user. If the person is detected within a certain angle of acceptance, the method may be arranged to find the context likely to be a conversation with the person, thus it will be determined that a mute state notification should not be provided. Alternatively, or additionally, a beamforming setup can also be used to detect if the user points his/her attention towards the person. This is done by using beamforming to detect if the user turns his/her head towards the person speaking. When the person starts speaking the headset detects the person at a certain angle. When the user turns his/her head towards the person, the headset will detect the person at another angle, and thus it may be determined that a conversation is a likely context, and thus a mute state notification should not be provided.
2) Noise cancellation algorithm to optimize VAD performance. E.g. an environmental noise cancellation (ENC) algorithm may use the input of the primary microphone (e.g. mouth microphone) and one or more separate microphones to filter out surrounding noise. By combining the two techniques the VAD algorithm will not be affected as much by surrounding noise, thus the present invention will decrease the risk of an environmental sound falsely activating the mute state notification.
3) Conversation context awareness. A primary microphone (e.g. mouth microphone) capturing the user's speech and a secondary microphone (or microphones) capturing speech in the user's surroundings are used. For each input in the two microphones, a separate running VAD algorithm detects if speech is present to let the headset know when the user is speaking and when someone is speaking in the user's surroundings. A model may be used to estimate the likelihood that the speech captured at the two microphones are part of the same conversation. This estimate can then be used to determine a mute state notification should be provided.
4) Call activity context awareness. Using two separate running VAD algorithms when the user is in a call, where one VAD algorithm detects speech in the signal from the primary microphone (e.g. mouth microphone). The other VAD algorithm detects speech by processing incoming audio from the call to determine call activity, i.e. speech activity in the call. Presence of speech in the call activity is used to estimate the likelihood that the user unintendedly is speaking into a muted microphone. If speech is not detected in the call activity and the user speaks into a muted microphone, it is estimated likely that the call participants are waiting for the user to contribute, thus a mute state notification is provided. If speech is detected in the call activity and the user speaks into a muted microphone, it is estimated less likely that the call participants are waiting for the user to contribute, thus a mute state notification is not provided in such case.

To sum up, the invention provides a method and a device for notifying a user of a mute state of a microphone system during a call, in case the user speaks while the microphone system is muted, as defined in the independent claims.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for notifying a user of a mute state of a microphone system during a call with one or more other participants, in case the user speaks while the microphone system is muted, the method comprising
- processing (VAD) an output signal from the microphone system according to a Voice Activity Detection algorithm by means of a processor system while the microphone system is muted,
- determining (S_D) if speech is present in accordance with an output of the Voice Activity Detection algorithm,
- determining (D_AC) if an additional condition is fulfilled, and
- providing (P_MSN) a mute state notification to the user only if it is determined that speech is present and the additional condition is fulfilled,
**characterized in that**
the additional condition is that it is not likely that the user has a physical conversation, and **in that**
the microphone system comprises a microphone (MM) capturing the user's speech and
at least one additional microphone (M2) to determine speech from another source, wherein the method comprises performing a first Voice Activity Detection algorithm on output signals from the microphone capturing the user's speech, and performing a second Voice Activity Detection algorithm on output signals from the at least one additional microphone to determine if it is likely that the user has a physical conversation.

2. The method according to claim 1, comprising determining a timing between speech from the user and speech from the another source so as to determine if it is likely that the user has a physical conversation.

3. The method according to claim 1 or 2, comprising performing a Voice Activity Detection algorithm on a signal indicative of sound from at least one other participant in the call, so as to detect speech from the at least one other participant in the call, and providing a mute state notification to the user only in case it is detected that the user speaks, while at the same time there is no speech detected from the at least one other participant in the call.

4. The method according to any of the preceding claims, comprising performing a noise cancellation algorithm (ENC) by processing output signals from the microphone capturing the user's speech and the at least one additional microphone to suppress surrounding noise.

5. A device comprising a microphone system and a processor system (P) arranged to perform the method according to any of claims 1 - 4, the microphone system comprising the microphone (MM) and the at least one additional microphone (M2).

6. The device according to claim 5, comprising a headset system arranged for two-way audio communication, the headset system comprising
- a headset (HS) arranged to be worn by the user, the headset (HS) comprising the microphone (MM), the microphone being a mouth microphone (MM), and at least one ear cup with a loudspeaker,
- a mute activation function (MT) which can be activated by the user to mute sound from the mouth microphone (MM) in a mute state during the call, and
- the processor system (P) arranged to determine if it is appropriate to notify the user of a mute state, when the user speaks while the mouth microphone (MM) is in the mute state.

7. The device according to claim 6, wherein the at least one additional microphone (M2) is positioned separate from the mouth microphone (MM).

8. The device according to claim 6 or 7, wherein the processor system (P) is arranged to provide the notification to the user as an audible notification via the loudspeaker.

9. Use of the method according to any of claims 1-4 for performing one or more of: a telephone call, an on-line call, and a tele conference call.

## Patentansprüche

1. Verfahren zum Benachrichtigen eines Benutzers über einen Stummschaltungszustand eines Mikrofonsystems während eines Anrufs mit einem oder mehreren Teilnehmern, falls der Benutzer spricht, während das Mikrofonsystem stummgeschaltet ist, wobei das Verfahren umfasst:
- Verarbeiten (VAD) eines Ausgabesignals von dem Mikrofonsystem gemäß einem Sprachaktivitätsdetektionsalgorithmus mittels eines Prozessorsystems, während das Mikrofonsystem stummgeschaltet ist,
- Bestimmen (S_D),ob Sprechen vorliegt, gemäß einer Ausgabe des Sprachaktivitätsdetektionsalgorithmus,
- Bestimmen (D_AC), ob eine zusätzliche Bedingung erfüllt ist, und
- Bereitstellen (P_MSN) einer Stummschaltungsbenachrichtigung an den Benutzer nur dann, wenn bestimmt wird, dass Sprechen vorliegt und die zusätzliche Bedingung erfüllt ist,
**dadurch gekennzeichnet, dass**
die zusätzliche Bedingung darin besteht, dass es unwahrscheinlich ist, dass der Benutzer eine physische Konversation führt, und
dadurch, dass
das Mikrofonsystem ein Mikrofon (MM), das das Sprechen des Benutzers erfasst, und mindestens ein zusätzliches Mikrofon (M2) zum Bestimmen von Sprechen von einer anderen Quelle umfasst, wobei das Verfahren ein Ausführen eines ersten Sprachaktivitätsdetektionsalgorithmus an Ausgabesignalen von dem Mikrofon, das das Sprechen des Benutzers erfasst, und ein Ausführen eines zweiten Sprachaktivitätsdetektionsalgorithmus an Ausgabesignalen von dem mindestens einen zusätzlichen Mikrofon umfasst, um zu bestimmen, ob es wahrscheinlich ist, dass der Benutzer eine physische Konversation führt.

2. Verfahren nach Anspruch 1, umfassend Bestimmen einer zeitlichen Abstimmung zwischen Sprechen von dem Benutzer und Sprechen von der anderen Quelle, um zu bestimmen, ob es wahrscheinlich ist, dass der Benutzer eine physische Konversation führt.

3. Verfahren nach Anspruch 1 oder 2, umfassend Ausführen eines Sprachaktivitätsdetektionsalgorithmus an einem Signal, das Töne von mindestens einem anderen Teilnehmer an dem Anruf anzeigt, um Sprechen von dem mindestens einen anderen Teilnehmer an dem Anruf zu detektieren, und Bereitstellen einer Stummschaltungsbenachrichtigung an den Benutzer nur dann, falls detektiert wird, dass der Benutzer spricht, während gleichzeitig kein Sprechen von dem mindestens einen anderen Teilnehmer an dem Anruf detektiert wird.

4. Verfahren nach einem der vorstehenden Ansprüche, umfassend Ausführen eines Geräuschunterdrückungsalgorithmus (ENC) durch Verarbeiten von Ausgabesignalen von dem Mikrofon, das das Sprechen des Benutzers erfasst, und dem mindestens einen zusätzlichen Mikrofon, um Umgebungsgeräusche zu unterdrücken.

5. Vorrichtung, umfassend ein Mikrofonsystem und ein Prozessorsystem (P), angeordnet zum Ausführen des Verfahrens nach einem der Ansprüche 1-4, wobei das Mikrofonsystem das Mikrofon (MM) und das mindestens eine zusätzliche Mikrofon (M2) umfasst.

6. Vorrichtung nach Anspruch 5, umfassend ein Headset-System, das für eine zweiseitige Audiokommunikation angeordnet ist, wobei das Headset-System umfasst:
- ein Headset (HS), das zum Tragen durch den Benutzer angeordnet ist, wobei das Headset (HS) das Mikrofon (MM) umfasst, wobei das Mikrofon ein Mundmikrofon (MM) ist, und mindestens eine Hörkapsel mit einem Lautsprecher,
- eine Stummschaltaktivierungsfunktion (MT), die vom Benutzer aktiviert werden kann, um Töne von dem Mundmikrofon (MM) in einem Stummschaltungszustand während des Anrufs stummzuschalten, und
- das Prozessorsystem (P), das dafür angeordnet ist, zu bestimmen, ob es zweckdienlich ist, den Benutzer über einen Stummschaltungszustand zu benachrichtigen, wenn der Benutzer spricht, während sich das Mundmikrofon (MM) im Stummschaltungszustand befindet.

7. Vorrichtung nach Anspruch 6, wobei das mindestens eine zusätzliche Mikrofon (M2) getrennt von dem Mundmikrofon (MM) positioniert ist.

8. Vorrichtung nach Anspruch 6 oder 7, wobei das Prozessorsystem (P) dafür angeordnet ist, die Benachrichtigung an den Benutzer als eine akustische Benachrichtigung über den Lautsprecher bereitzustellen.

9. Verwendung der Verfahrens nach einem der Ansprüche 1-4 zum Ausführen von einem oder mehreren von: einem Telefonanruf, einem Online-Anruf und einem Telekonferenz-Anruf.

## Revendications

1. Procédé de notification à un utilisateur d'un état de sourdine d'un système de microphone pendant un appel avec un ou plusieurs autres participants, dans le cas où l'utilisateur parle tandis que le système de microphone est en sourdine, le procédé comprenant
- le traitement (VAD) d'un signal de sortie provenant du système de microphone selon un algorithme de détection d'activité vocale au moyen d'un système de processeur tandis que le système de microphone est coupé,
- la détermination (S_D) du fait de savoir si la parole est présente conformément à une sortie de l'algorithme de détection d'activité vocale,
- la détermination (D_AC) du fait de savoir si une condition supplémentaire est remplie, et
- la fourniture (P_MSN) d'une notification d'état de sourdine à l'utilisateur uniquement s'il est déterminé que la parole est présente et que la condition supplémentaire est remplie,
**caractérisé en ce que**
la condition supplémentaire est qu'il est peu probable que l'utilisateur ait une conversation physique, et
**en ce que**
le système de microphone comprend un microphone (MM) capturant la parole de l'utilisateur et au moins un microphone supplémentaire (M2) pour déterminer la parole d'une autre source, dans lequel le procédé comprend l'exécution d'un premier algorithme de détection d'activité vocale sur des signaux de sortie provenant du microphone capturant la parole de l'utilisateur, et l'exécution d'un second algorithme de détection d'activité vocale sur les signaux de sortie provenant de l'au moins un microphone supplémentaire pour déterminer s'il est probable que l'utilisateur a une conversation physique.

2. Procédé selon la revendication 1, comprenant la détermination d'une synchronisation entre la parole de l'utilisateur et la parole de l'autre source afin de déterminer s'il est probable que l'utilisateur a une conversation physique.

3. Procédé selon la revendication 1 ou 2, comprenant l'exécution d'un algorithme de détection d'activité vocale sur un signal indiquant le son d'au moins un autre participant à l'appel, de manière à détecter la parole d'au moins un autre participant à l'appel, et la fourniture d'une notification d'état de sourdine à l'utilisateur uniquement dans le cas où il est détecté que l'utilisateur parle, tandis qu'en même temps aucune parole n'est détectée provenant de l'au moins un autre participant à l'appel.

4. Procédé selon l'une quelconque des revendications précédentes, comprenant l'exécution d'un algorithme d'annulation de bruit (ENC) en traitant les signaux de sortie du microphone capturant la parole de l'utilisateur et de l'au moins un microphone supplémentaire pour supprimer le bruit environnant.

5. Dispositif comprenant un système de microphone et un système de processeur (P) agencés pour exécuter le procédé selon l'une quelconque des revendications 1 à 4, le système de microphone comprenant le microphone (MM) et le au moins un microphone supplémentaire (M2).

6. Dispositif selon la revendication 5, comprenant un système de casque agencé pour une communication audio bidirectionnelle, le système de casque comprenant
- un casque (HS) agencé pour être porté par l'utilisateur, le casque (HS) comprenant le microphone (MM), le microphone étant un microphone buccal (MM), et au moins une oreillette avec un haut-parleur,
- une fonction d'activation de sourdine (MT) qui peut être activée par l'utilisateur pour couper le son du microphone buccal (MM) dans un état de sourdine pendant l'appel, et
- le système de processeur (P) agencé pour déterminer s'il convient de notifier à l'utilisateur un état de sourdine, lorsque l'utilisateur parle tandis que le microphone buccal (MM) est dans l'état de sourdine.

7. Dispositif selon la revendication 6, dans lequel le au moins un microphone supplémentaire (M2) est positionné séparément du microphone buccal (MM).

8. Dispositif selon la revendication 6 ou 7, dans lequel le système de processeur (P) est agencé pour fournir la notification à l'utilisateur sous la forme d'une notification audible via le haut-parleur.

9. Utilisation du procédé selon l'une quelconque des revendications 1 à 4 pour effectuer l'un ou plusieurs parmi : un appel téléphonique, un appel en ligne, et une téléconférence.
